(19) Europäisches Patentamt / European Patent Office / Office européen des brevets

(11) **EP 3 063 560 B1**

(12) **EUROPEAN PATENT SPECIFICATION**

(45) Date of publication and mention
of the grant of the patent:
**19.08.2020 Bulletin 2020/34**

(21) Application number: **14793243.8**

(22) Date of filing: **28.10.2014**

(51) Int Cl.:
**G01T 1/36** (2006.01)

(86) International application number:
**PCT/GB2014/053196**

(87) International publication number:
**WO 2015/063463 (07.05.2015 Gazette 2015/18)**

(54) **METHOD OF SPECTRAL DATA DETECTION AND MANIPULATION**

VERFAHREN ZUR SPEKTRALDATENERKENNUNG UND -MANIPULATION

PROCÉDÉ DE DÉTECTION ET DE MANIPULATION DE DONNÉES SPECTRALES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2013 GB 201318995**

(43) Date of publication of application:
**07.09.2016 Bulletin 2016/36**

(73) Proprietor: **Kromek Limited
Sedgefield, Durham TS21 3FD (GB)**

(72) Inventors:
• **POWELL, Andrew Keith
Sedgefield, Durham TS21 3FD (GB)**
• **RADLEY, Ian
Sedgefield, Durham TS21 3FD (GB)**

(74) Representative: **Murgitroyd & Company
Murgitroyd House
165-169 Scotland Street
Glasgow G5 8PL (GB)**

(56) References cited:
**WO-A1-00/77676        WO-A1-2014/080209
US-A- 5 262 947**

**Description**

The invention relates to a method of detection of a spectral dataset and for example of a resolved radiation spectrum which is processed to deconvolve/ unfold spectral data to mitigate noise effects.

The invention in particular in the preferred case relates to a method of detection of a radiation count spectrum that exhibits statistical noise having a discrete probability distribution such as a Poisson distribution and generalisable to a continuous distribution attributable to a stochastic aspect of the process by applying a deconvolution to reconstruct a radiation count spectrum more representative of a true spectrum. The invention in particular in the preferred case relates to a method of detection of a low count radiation spectrum such as a low count $\gamma$-ray spectrum from a radioactive source or contaminated sample to reconstruct a radiation count spectrum more representative of a true spectrum, and the invention is discussed herein in that context. However the principles of the invention may be applied to the collection or processing of any spectral data that exhibits statistical noise having a discrete or continuous probability distribution. In this context a radiation count spectrum more representative of a true spectrum is one comprising a distribution of counts resolved into energy bins representative of the radioactive emissions of a radioactive species at distinct energies (photo-peaks, whereby the entire energy of the radioactive emission is deposited into the detector's active medium), unmodified by the detection process or the environment through inelastic scattering processes and the like.

There is a requirement to provide accurate radiation dose measurements from a range of test samples both in the laboratory and in the field, using modern energy discriminating radiation detectors that resolve collected intensity data across the radiation spectrum, and for example distributes counts into plural energy bins corresponding to energy bands defined across the radiation spectrum. Importantly, if a total dose reading can be split into these constituent energy bins, the nature of the radioactive source components in the sample and their likely origins can also be elucidated. The accurate detection of the presence of manmade radioisotopes such as that of caesium, in soil or food samples is of particular interest. $^{137}$Cs is indicative of contamination by power production processes using nuclear fission, with this isotope being a majority fission daughter product. It can be detected from its signature 662 keV $\gamma$-ray photo-peak. There is an interest in accurately determining $\gamma$-ray spectra from a variety of tests samples.

The measurement of the activity of radioactive sources for the purposes of identifying the radioactive species contained in the source typically involves accumulating radioactive counts into spectral channels as generated by an energy selective detection system. For example this is done in a two stage process first in that it uses an energy selective detection system capable of accumulating photon counts in an energy discriminating manner and second in that appropriate processing electronics distributes these captured events into a plurality of energy bins corresponding to a plurality of predefined energy bands defined across the radiation spectrum. The detection system may comprise multiple detectors each responsive to a particular predefined energy band and/ or a detector adapted to produce spectroscopic resolution inherently.

To obtain accurate overall sample activity measures, it is necessary to gather statistically meaningful numbers of decay events, which can take many hours for low activity samples. This problem is exacerbated if accurate activity levels are to be obtained over discrete energy ranges in an overall $\gamma$-ray spectrum, to allow for the identification of sources from $\gamma$-ray emission peak energies. The problem then arises of how to reconstruct the $\gamma$-ray spectrum of a low activity sample having poor counting statistics.

Inevitably, the recorded count spectrum is modified by energy loss processes, such as Compton scattering, which can take place in or around the detector vicinity. The spreading to lower energy of a proportion of the incident $\gamma$-rays reduces the count levels measured at the photo-peak energies from which the nature of the source material might be identified. As the process involved in the emission of $\gamma$-rays is random, this redistribution of counts to lower energies by the scattering processes in and around the detection apparatus increases the uncertainties associated with each energy selective measure as the counts accumulated in the photo-peak channel are decreased.

The energy loss process associated with the detection process of $\gamma$-rays can be quantified through computer Monte Carlo simulations and can then used to better estimate the spectral features of the source spectrum utilising a process of deconvolution / unfolding.

Recently, deconvolution algorithms such as the method of Richardson and Lucy have proved successful in reconstructing $\gamma$-ray spectra from counts recorded in specific types of detector. As the incident flux is modified by the detector's instrument response, before a signal is logged, this instrument function needs to be de-convolved from the recorded signal to obtain a true measure of the incident $\gamma$-ray flux. A total dose rate can then be evaluated by weighting the de-convolved spectrum by the appropriate energy-dose factors, which can be found from tables. The instrument response function can be generated for a range of detector types, configurations and environments by direct computer simulation of the physical processes of the radiation interactions within and around the detector assembly.

Not surprisingly, it has been found that deconvolution methods require a minimum number of logged events to be successful at reconstructing a particular gamma ray spectrum as they become overwhelmed by statistical noise; with the higher the energy of the spectral features the higher incident flux being required as the detector sensitivity typically decreases with energy. Too few counts introduce spiked features towards the high energy end of the reconstructed spectrum which can cause large overestimates of perceived dose. This arises as the instrument detector response becomes smaller with increased $\gamma$-ray energy, making the high energy deconvolution ultimately prone to numerical instability with noisy data. It should be remembered that count data has to originate in the form of integer values, representing discrete logged events and that these are subject to statistical uncertainties arising from the Poisson nature of the radioactive decay process. This is exacerbated at low count rates with very small numbers of recorded events at each value of energy producing a data set which is statistically noisy.

Currently methods for spectral unfolding, such as maximum likelihood deconvolution, are used to remove the effect of the response function of a particular $\gamma$-ray detector implementation, its environment and any shielding, to estimate an incident $\gamma$-ray fluence spectrum, for the purpose of $\gamma$-ray line isolation and subsequent nuclear source material identification. There is no significant improvement in the signal-to-noise ratio of restored features such as photo-peaks post this processing. The reason for this is that current unfolding procedures provide a method of rescaling the count spectrum to better represent the original fluence but do not significantly enhance the statistics of the original signal as would be achieved by remapping instead of rescaling the lower energy recorded scattering events into photo-peak lines from whence they originated.

This is the problem that is faced when attempting to determine, in the shortest possible times, the $\gamma$-ray spectra from samples of presumed low activity such as potentially contaminated food or soil samples. The invention seeks to mitigate this by applying an alternative methodology. WO0077676 relates to a method of determining an intrinsic spectrum from a measured spectrum.

WO2014/080209 constitutes prior art falling under Art. 54(3) EPC and relates to a method of spectral data detection and manipulation. In accordance with the invention in a first aspect, a method is provided according to claim 1.

The method is in particular a method for the processing of a collected resolved radiation spectrum, and is in particular a method for the processing of a radiation spectrum that exhibits statistical noise having a discrete or continuous probability distribution such as a Poisson distribution attributable to a stochastic aspect of the radiative process, to deconvolve/ unfold spectral data. The method is most preferably a method for the processing of a collected low count rate $\gamma$-ray spectrum to deconvolve/ unfold spectral data.

The method of the invention comprises the steps of the claims appended hereto.

The spectrum count dataset comprises count data relating to measured flux incident upon a suitable detector system that has been resolved spectroscopically for example in that counts of captured events have been distributed into a plurality of energy bins. The spectrum count dataset comprises count data for which there is a higher degree of confidence in the event statistics but a noisy overall spectrum. The method of the invention takes the spectroscopically resolved data for which there is a higher degree of confidence in the event statistics but a noisy overall spectrum and progressively fits the event data items to a nominal true spectrum which is selected such that there is a relatively higher confidence in the spectrum shape but a relatively lower confidence in the event statistics. The nominal spectrum with relatively high confidence in spectral shape may for example be based on an estimate in principle from an expectation of the presence of particular species or may be based on a measured spectrum from an alternative detector that generates data with a relatively high confidence in spectral shape but is otherwise inferior in its event statistics, or may be based on a generated spectrum that is generated by processing measured data in an alternative manner that produces a representative true spectrum with a relatively high confidence in spectral shape. Combinations of these and other approaches may be considered provided the result is a nominal true spectrum having a relatively high confidence in spectral shape for use at step b.

The method of the invention is a simulated stochastic process for efficiently matching the count data from the measured spectrum to a nominal true spectrum which is selected such that there is a high confidence in the spectrum shape, comparing for example after the operation of a system response function this nominal true spectrum to the actual measured count data. The method constrains the process so that the total number of recorded events in the generated, matching count spectrum is discretised and conserved.

The method comprises the generation of a modified spectrum count dataset in the manner described in step c, a determination of whether the modified spectrum count dataset is a better statistical fit to the nominal true spectrum by computing a statistical fit at step d, and accepting/ rejecting at step e based on that determination. More completely, the method inherently additionally requires:

   computing a statistical fit between the unmodified spectrum count dataset and the nominal true spectrum and computing a statistical fit between the modified spectrum and the nominal true spectrum;
   comparing the statistical fits computed for the modified and the unmodified spectrum count datasets;
   accepting the modified spectrum count dataset as a better approximation of the true spectrum if this comparison indicates an increased statistical fit between the modified spectrum count dataset and the nominal true spectrum, and rejecting the modified spectrum count dataset if this comparison indicates a reduced statistical fit between the modified spectrum count dataset and the nominal true spectrum.

Performance of the modification, comparison and accept/ reject steps successively and iteratively progressively generates a spectrum count dataset that more closely approximates to the nominal true spectrum.

The method is in particular distinguished in that it preserves the number of recorded counts by redistributing them in energy space rather than rescaling their values. The method tends to force the remapping of counts from lower energy points into the photo-peak features of the nominal true incident spectrum as it is determined in any suitable manner. Consequently, the count statistics associated with the restored photo-peaks is generally far superior to that achieved by purely rescaling the heights of features in the measured data as is done currently. This procedure better represents the underlying physics as it is known that recorded events at low energy may have arisen from scattering of higher energy events, thus the total number of events in a spectrum is conserved in a particular sampling interval example. This property is lost by rescaling spectral unfolding procedures currently used.

The above process may be carried out repeatedly to iteratively approach a more representative modified measured spectrum for the recorded data. The sensitivity of the outcome of a deconvolution operation to the inherent noise level in any practical $\gamma$-ray detection system, along with the system's varied sensitivity to $\gamma$-rays, requires that deconvolution is best performed as a constrained, iterative updating procedure. An updating schedule is applied to the measured spectrum, constrained by the requirement that source spectrum has to have non-negative count values at all energies, to arrive at a stable result which better illustrates the location and shape of the features contained within the source spectrum.

The invention is applied to a spectroscopically resolved spectrum dataset in which count data is resolved into values for each of a plurality of energy bands or bins. The measurement of the spectroscopically resolved spectrum dataset for example involves accumulating photon counts into spectral channels or energy bins corresponding to predefined energy bands distributed across the spectrum of a source/ target as generated by an energy selective detection system. For example this is done in a two stage process first in that it uses an energy selective detection system capable of accumulating photon counts in an energy discriminating manner and second in that this count data is distributed into a plurality of energy bins to produce a set of cumulative values representative of the overall received flux in each of a plurality of predefined energy bands across the likely source spectrum, for example by means of suitable processing electronics which may include a suitable multichannel analyser. The detection system may comprise multiple detectors each responsive to a particular predefined energy or energy bandwidth and/ or a detector adapted to produce spectroscopic resolution inherently.

Plural energy bands may be defined and in the preferred case plural energy bins may accumulate counts across pre-determined energy intervals distributed over a part and especially a substantial part of a radiation spectrum of a target/ source. Such pre-determined energy intervals may have suitable energy band width, for example of 5 to 20 keV. Plural energy bands may be defined and in the preferred case plural energy bins may accumulate counts across pre-determined energy intervals that are discretely separated or adjacent for example.

In accordance with the method of the invention the count value across each pre-determined energy interval and in the preferred case of each of the energy bins of the estimate of the true spectrum is perturbed, in turn, in a random way but with a predetermined maximum magnitude. The maximum magnitude may for example be scaled as a function of the expected level of noise in the value.

In accordance with the principles of the invention there is a step of resolving the radiation collected at the detector spectroscopically into a resolved dataset of measured flux at a plurality of energy bins which is performed by the detector and as a result of an inherent spectroscopic resolution of the detector. Preferably data is resolved spectroscopically into a resolved dataset of measured flux at at least three energy bins. In many instances a larger plurality of bands will be desired.

The method is thus a method of collection of radiation data which is then deconvolved in accordance with the method of the first aspect, and preferred features of the two aspects of the invention will be understood accordingly by analogy.

The detector system for use with the method of the invention, to generate the spectrum to be processed in the invention, is adapted to detect incident radiation in spectroscopically resolved manner in plural separate energy bins in the sense that the detector system is adapted to differentiate incident radiation simultaneously into plural separate energy bins and preferably at least three such energy bins across the expected detection spectrum. Photon count data is resolved into values for each of a plurality of energy bins. The measurement of the spectroscopically resolved spectrum for example involves accumulating photon counts into spectral channels or bins corresponding to predefined energy bands across the spectrum of a source/ target.

For example this is done in a two stage process first in that it uses an energy selective detection system capable of accumulating photon counts in an energy discriminating manner and second in that this count data is distributed into a plurality of energy bins to produce a set of cumulative values representative of the overall flux in each of a plurality of predefined energy bands. For example, the detector exhibits a spectroscopically variable response across at least a part of the expected detection spectrum allowing such simultaneous differentiation of incident radiation into plural energy bins.

The radiation to be detected in the second aspect of the invention, or the spectrum to be processed in the first aspect of the invention, is for example high-energy radiation such as ionizing radiation, for example high energy electromagnetic radiation such as x-rays and/ or $\gamma$-rays, or subatomic particle radiation, and the detector is adapted correspondingly to detect radiation in this spectrum. The radiation to be detected in the second aspect of the invention, or the spectrum to be processed in the first aspect of the invention, is for example from a radioactive source, and is for example a $\gamma$-ray spectrum. The invention is particularly applicable to a method of detection or manipulation of a low count radiation spectrum such as a low count $\gamma$-ray spectrum from a radioactive source or from a sample such as a soil or food sample contaminated by radioactive contaminant.

A particular advantage of the method of the invention is that it allows the more sensitive identification of the nature of the radioactive source components in such a measured spectrum. This may also allow the likely origins of those radioactive components to be elucidated. This may in particular be the case where it is desired to identify particular contaminants, such as $^{137}Cs$, which is indicative of contamination by power production processes using nuclear fission.

Thus, in the preferred case, the method comprises a method of examination of an object or environment, and for example a sample from such an object or environment, which is suspected to be contaminated with undesired radioactive contaminant, and in particular the method comprises a method of identification of particular radioactive species within the radioactive contaminant.

The method of the second aspect not covered by the claimed invention : in particular comprises a method for the detection of contamination of an object or environment by radiation comprising the particular steps of:

collecting incident radiation at a detector in such manner that the incident radiation is spectroscopically resolved into plural separate energy bins,
for example by:

bringing a suitable radiation detector system into an environment to be tested and/ or into proximity with an object to be tested and/ or by bringing a sample from an object or environment to be tested into proximity with a suitable radiation detector system, and
collecting incident radiation at the detector for a suitable time period.

The detector for use with the method of the second aspect preferably exhibits a spectroscopically variable response across at least a part of this spectrum allowing spectroscopic information to be retrieved and allowing incident radiation information to be detected simultaneously at a plurality of differentiated energy bands and spectrum count data resolved simultaneously into a plurality of differentiated energy bins. Preferably incident radiation data is resolved spectroscopically between at least three energy bins simultaneously.

A suitable detector for implementation of the invention comprises one or more detector elements of a semiconductor material adapted for high energy physics applications, such as a material able to act as a detector for high energy radiation, and for example high energy electromagnetic radiation such as x-rays or $\gamma$-rays, or subatomic particle radiation. The resultant detector element comprises at least one layer of such material and is thus a device adapted for high energy physics applications, and for example a detector for high energy radiation such as x-rays or $\gamma$-rays, or subatomic particle radiation.

In accordance with the invention, collected data is resolved spectroscopically into at least two and preferably at least three and for example many energy bins within the spectrum of the source. The semiconductor material of at least one of the detector elements is preferably a material adapted to exhibit a spectroscopically variable response across at least a substantial part of the intended radiation spectrum in use. In particular a semiconductor material is used that exhibits inherently as a direct material property a direct variable electrical effect and for example photoelectric response to different parts of the radiation spectrum in use.

In a preferred embodiment the semiconductor material is formed as a bulk crystal, and for example as a bulk single crystal (where bulk crystal in this context indicates a thickness of at least 500 $\mu$m, and preferably of at least 1 mm).

In a preferred embodiment the semiconductor material may be selected from Group II-VI semiconductors and in particular may be selected from cadmium telluride, cadmium zinc telluride (CZT), cadmium manganese telluride (CMT), and alloys thereof, and for example, save for incidental impurities, consists essentially of crystalline $Cd_{1-(a+b)}Mn_aZn_bTe$ where a+b <1 and a and/ or b may be zero. A detector may also have other detector elements of other materials for additional functionality.

The method of the invention for example makes possible the use of CZT type detectors for back-scattering measurements, where the low energy region contains a significant fraction of the information sought. Firstly, by ignoring the low energy region of the response matrix, a best fit spectrum can be determined by the new method. This restored spectrum is then offered to a RL de-convolution algorithm utilising the entire response matrix for the detector, to give a most likely spectrum now including low energy values. A RL de-convolution algorithm can also be used prior to the stochastic optimisation algorithm providing a good initial starting point for the algorithm for more rapid results. In all cases where the restored spectrum has been loaded in to a RL de-convolution routine, unphysical spiked features have been re-introduced, except in the case where zero valued spectral bin values have been maintained and for which the RL algorithm has no means of modifying them. In this case, the RL algorithm does little modification to the already restored spectrum but can be used to re-introduce values for the lowest energy regions.

The method of the invention is equally, if not more applicable to the optimising of signals derived from hybrid detector systems. That is to say, the method of the invention may be applied to detector systems comprising a plurality of radiation detectors of at least two different types/ having at least two different response properties, and in particular from a plurality of radiation detectors having at least two different energy resolutions and/ or of different efficiency. It provides the optimum way of processing the signals from two (or more) sources to accurately reflect the flux that gave rise to the recorded signals, through physically separate and differing channel responses.

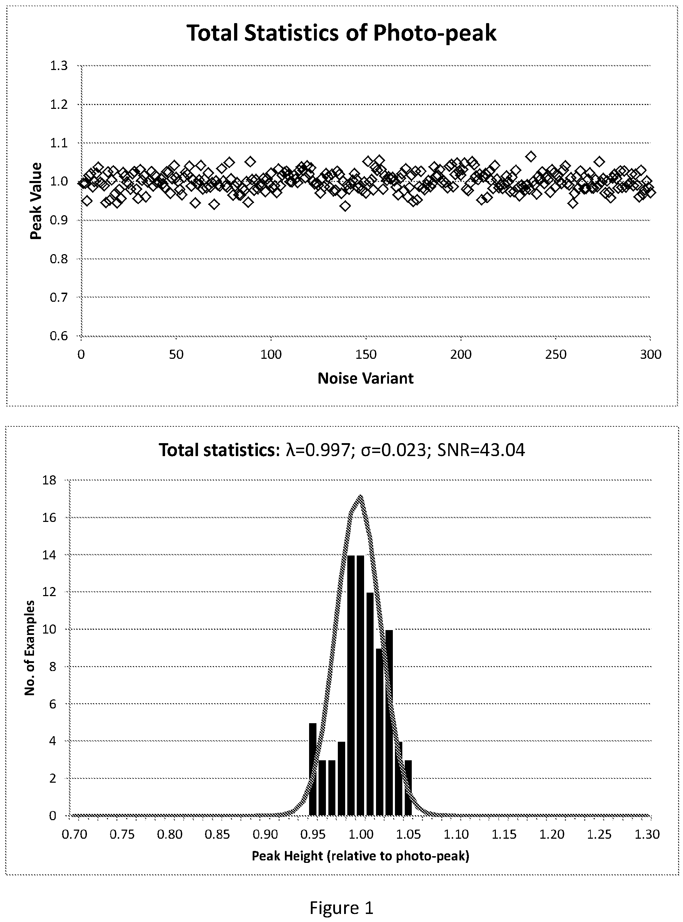

An example method of implementation of the invention is illustrated with reference to figures 1 to 9 of the accompanying drawings. The legends $\lambda$, $\sigma$ and SNR show the value of the reconstruction peak height as a fraction of the photo-peak, the standard deviation in peak height of the sample set of 300 and the resulting signal-to-noise-ratio of the sample set reconstructions respectively.

Figure 1 is a scatter plot and histogram for a simulation of 300 spectral measurements showing the expected Poisson fluctuation in the data in accordance to the number of counts that are recorded in each energy range bins.

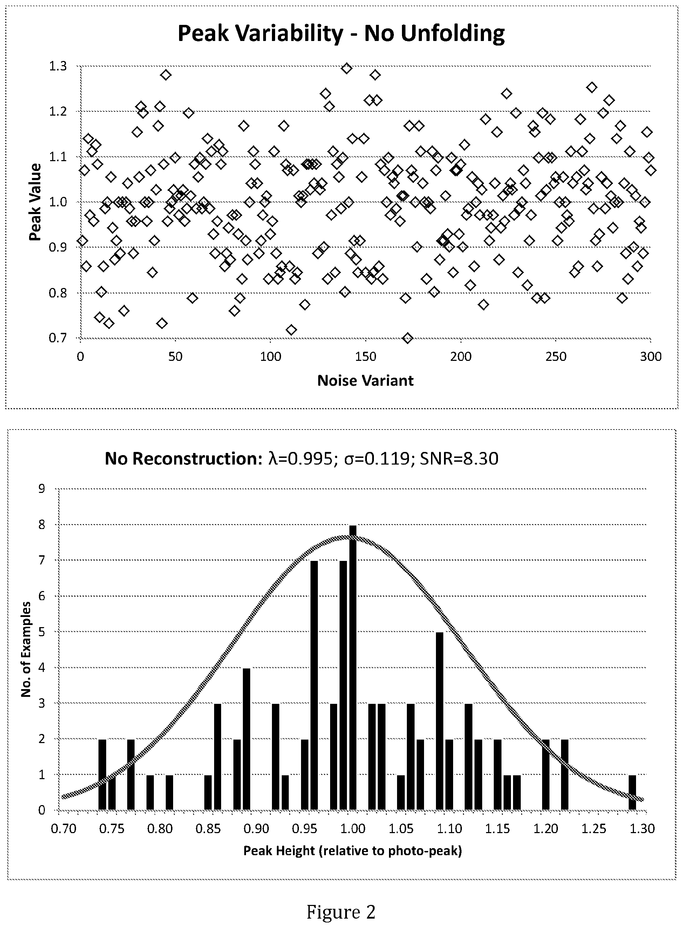

Figure 2 shows a scatter plot and histogram for the above situation but considering the statistics that arise from the counts in the peak region of the recorded data alone. This sets the signal to noise ratio that will govern the success of peak finding methods on the raw count data. The statistics are not so good as in figure 1 as there are fewer counts to consider.

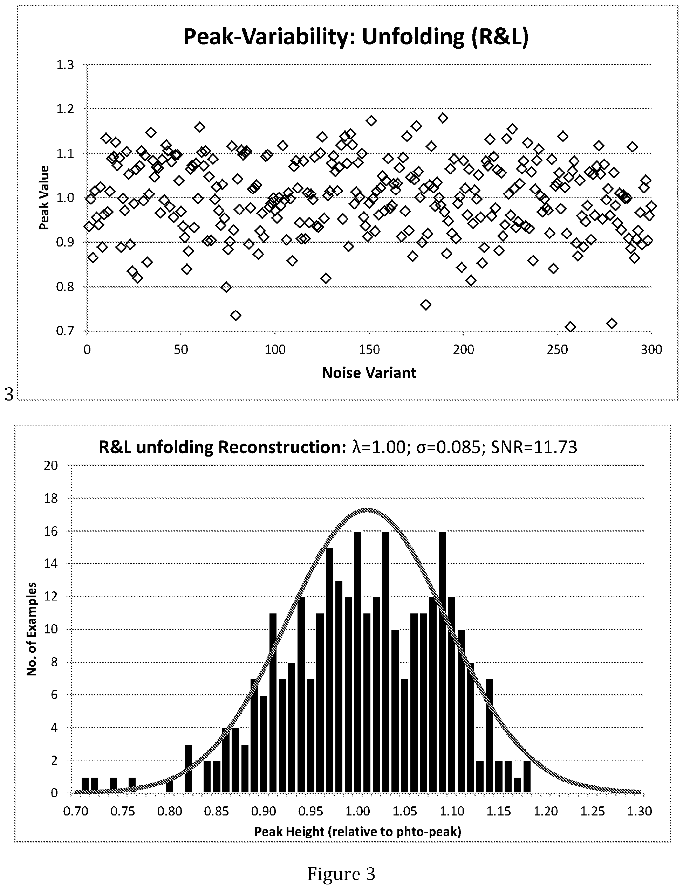

Figure 3 shows the rescaled maximum likelihood (ML) result of re-estimating the original fluence spectrum by deconvolution (Richardson & Lucy algorithm) of the measured data with the response function of the detection system. The statistics are not much better than figure 2, i.e. the large fluctuation of peak height in the original measured count data, so any downstream analysis will be constrained by a similar signal-to-noise value. Note: There is some small improvement noticeable, however, as the ML method implicitly takes advantage, to some extent, of the inherent sparsity in the restored spectrum. This may be enhanced still further by over-determining the energy resolution of the response function in the form of a matrix as compared to the energy resolution of the measured data.

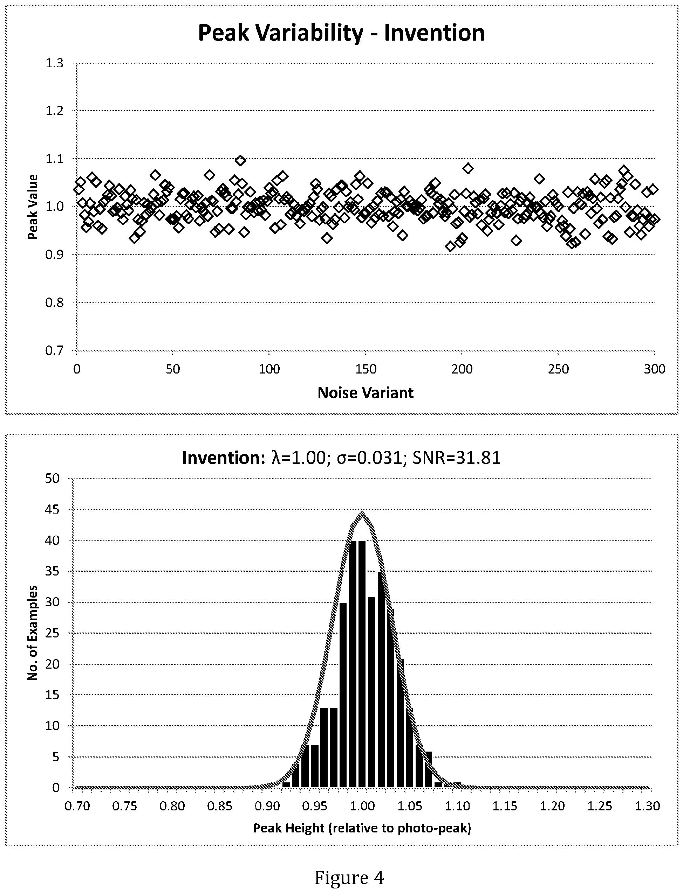

Figure 4 shows the re-estimating of the fluence spectrum using the method of the present invention. The signal-to-noise ratio and form of the distribution is far closer to that of figure 1 as more (or in this case most) of the restored spectral features are considered as having arisen from events that were recorded at lower energies but now have been re-assigned to the photo-peak features at energies as described by the form of the response function and from where they would have originated.

An example numerical method which could be used to manipulate the data in the illustrated manner is also discussed below.

**General Observations**

Currently methods for spectral unfolding of $\gamma$-ray spectra from radioactive nuclear sources for example, such as maximum likelihood deconvolution, are used to remove the effect of the response function of a particular $\gamma$-ray detector implementation, its environment and any shielding, to estimate an incident $\gamma$-ray fluence spectrum, for the purpose of $\gamma$-ray line isolation and subsequent nuclear source material identification.

Whilst deconvolution can be used to accurately locate the position and shape of the peaks in a source $\gamma$-ray spectrum, the result of such an operation is just as prone to the statistical uncertainties of the original measurement based upon the statistical fluctuation associated with counts in individual energy channels, thus offering little improvement in sensitivity and thus the ultimate ability to detect features in such a deconvolved spectrum.

All deconvolution methods modify the measured data by a rescaling procedure, whereby measured values are multiplied by some numerical factor, stretching or shrinking their amplitudes accordingly. Likewise the statistical uncertainties of the measured values are equally scaled achieving no significant improvement in a signal-to-noise measure and hence little improvement in the prospect of identifying and quantifying peaks within the revised spectrum when counts are generally low.

To enhance the statistical properties of the measured signal it is necessary that the total count number registered at each energy interval should be conserved by a process of source spectrum re-estimation that involves a reshaping rather than a rescaling.

Reshaping of the measured spectrum in to one that is more representative of the emission spectrum is easily illustrated when an emission at a single energy gave rise to a particular measured spectrum. Reallocation of the counts that had been distributed in the detection process to lower energy, back to the photo-peak energy would enhance the statistical certainty of the photo-peak measurement. This would improve the ability to discern the presence of the photo-peak, from any background noise and allow a better estimate of the source's activity at this energy. The concept is that counts are accumulated or diminished from spectral channels in accordance to the known response of the detector and the likely properties of the source spectrum as derived from a traditional deconvolution operation.

Whilst the concept of remapping the counts in measured spectrum back to an originating photo-peak energy is attractive, in actuality the complexity of applying the method directly to real world data would present difficulties, many of which arise from the large range of detector efficiencies over a range of γ-ray energies.

As the goal of the method is to enhance the counting statistics by accumulating the counts over a number of spectral channels, from knowledge that nearly all of these counts would have originated from events associated with a single γ-ray energy, it is possible to circumvent the difficulties associated with practicalities of the simplistic count redistribution method described above. What is required is a method to allocate the counts logged in spectrum to the appropriate energies associated with the original emission. Although this is trivial in the simplified example above, it becomes less obvious when there is more than single emission energy. It is possible to use as a guide to the shape (or the number of potential spectral lines of the source) the traditionally deconvolved spectrum, notwithstanding the attendant statistical uncertainties of the reconstructed spectrum. From this it might be assumed that the source is comprised of a few spectral lines. We might alternatively choose a maximum expected for this number.

The deconvolution procedure applied to just reconstructing a few photo-peaks can establish the relative strengths of these photo-peaks without being overly concerned with the remainder of the spectrum's details, which at low activity levels, can be expected to be zero valued in most energy channels. Because of this, the deconvolution can be applied to an underdetermined system, whereby the measurements are made over as few energy windows as is viable but with the advantage that each sample will return the sum of the count values for each energy channel that comprise the measuring window with the attendant improvement in statistics.

The deconvolution operation, as opposed to trying to best estimate the entire source spectrum is only required to reproduce the features at certain key photo-peak energies with the knowledge that the source spectrum is largely zero throughout most of the spectrum. Methods are available that admit solutions to such problems that require a minimum of non-zero elements in the reconstruction i.e. that can be termed *sparse.* Additionally, systems that do not at first readily admit such solutions can often be transformed, in a mathematical sense, whereby sparse solutions can then be found. An example of this is where background signal levels arising from radiation generally occurring in the environment can be estimated or directly measured and subtracted from the captured data preserving a minimum of non-zero elements i.e. sparse form of the reconstructed spectrum.

**Example Method**

Consider the linear operation of a response matrix A on an incident spectrum x, yielding a measurement spectrum b.

$$A \cdot x = b$$

Traditional deconvolution techniques enforce that $A$ is a square matrix, mapping every energy channel of a possible source stimuli to an equal number of energy channels that have been measured by the detector. Such a deconvolution is subject to the Poisson noise associated in each of the measured energy channels, which is more significant than the noise associated with the total number of counts detected in all energy channels and would be characteristic of the source alone.

As we cannot, apart from in the simplest of situations, readily infer how to reallocate the measured counts that have been spread into lower energy channels, through energy loss processes, back to the energy channels corresponding to the γ-ray emissions energies of the source, we cannot easily improve upon the statistical fluctuations of the original measured data, which then map through as fluctuations of a similar scale in the deconvolved spectrum.

We do have available as a guide, the results that can be obtained from a traditional deconvolution approach that give the shape and peaks that comprise the source γ-ray stimuli. In other words, we have a description of the complexity of the source spectrum which in all likelihood is going to be comprised of only a few energy peaks across the entire energy range of interest.

We now reformulate the detection process by limiting the measurements to a number of energy windows, for example five energy windows,. The measured photon counts accrued in the individual energy channels which have been selected to comprise each of the chosen energy windows are then summed. There is much scope for specifying these channels; with the aim of altering the properties of the correspondingly transformed response matrix, whereby many of its rows become linearly dependent and hence redundant, particularly if some of our measured parameters too are small i.e. the source is not complex; having fewer than five emission energies in this example.

The detection operation can now be cast as:

$$A \cdot x = b$$

such that:

$$\begin{pmatrix} a_{1,1} & \cdots & \cdots & \cdots & a_{1,n} \\ a_{2,1} & \ddots & \cdots & \cdots & a_{2,n} \\ a_{3,1} & \cdots & \ddots & \cdots & a_{3,n} \\ a_{4,1} & \cdots & \cdots & \ddots & a_{4,n} \\ a_{5,1} & \cdots & \cdots & \cdots & a_{5,n} \end{pmatrix} \cdot \begin{pmatrix} x_1 \\ \vdots \\ \vdots \\ \vdots \\ x_n \end{pmatrix} = \begin{pmatrix} b_1 \\ b_2 \\ b_3 \\ b_4 \\ b_5 \end{pmatrix}.$$

It is apparent that the right hand side of the equation is formed from the five prescribed summations of counts, selected from the many available energy channels, and which may even be randomly selected, reduces the Poisson fluctuation associated with these summed measures. Despite the system of equations being underdetermined for this example, with n variables to be derived from five measurements in this example, solutions become viable to such a system of equations because it is known that the source spectrum x is sparse i.e. nearly all zeros in value. Clearly, there is much scope for choosing the measurement ranges and their extents but in principle a method of solution is possible where by the statistics of the multi-spectral separated measurements can be enhanced.

Solution to the above problem requires knowledge of the numerical form of the response matrix and that many of its rows are linearly dependent. As the number of measurements is increased the dependency of the rows of the response matrix can be seen to increase, although this has to be considered to a degree that reflects the overall noise that is pertinent to the measurements.

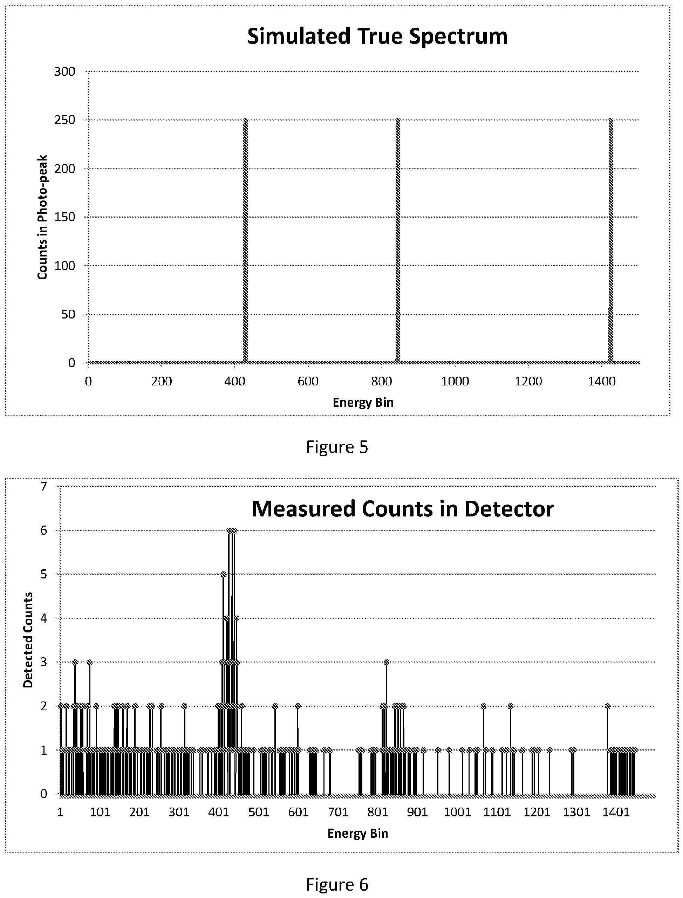

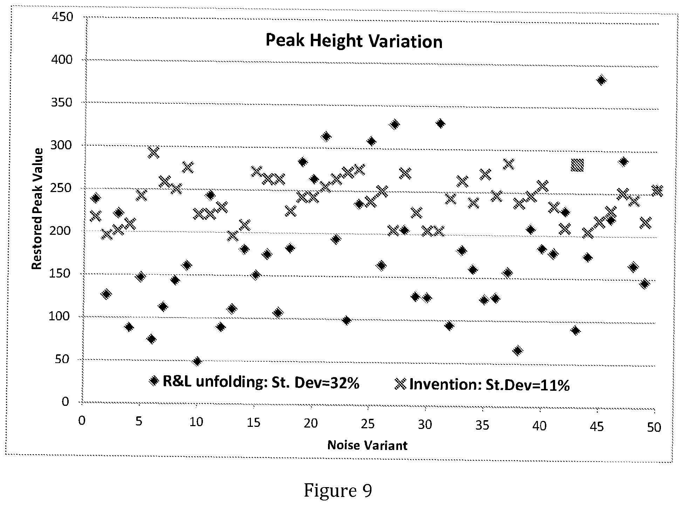

The comparison of the noise present in a reconstructed signal for a standard deconvolution method and one that enhances the statistics using the method outlined in accordance with the invention is illustrated in figures 5-9. A response matrix has been constructed to model γ-ray detector interactions in 1keV energy intervals up to and 1.5MeV and is used to regenerate source spectrum estimates from Poisson noise affected instances of simulated captured spectra (summarised in figure 9).

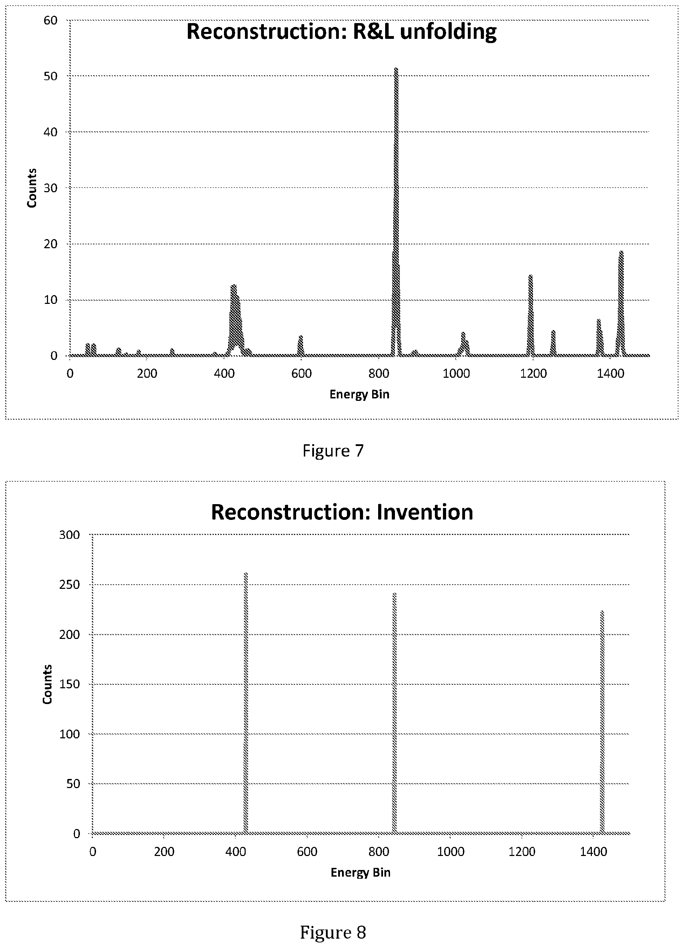

Figure 5 illustrate the simulated source spectrum consisting of three photo-peaks at their respective energies. Figure 6 shows the signal as would be detected by a simulated detector model having the above response matrix. The total number of measured counts is 482, distributed across the entire energy range. Figure 7 shows this poor signal level renders the usual Bayesian probability based method (R&L algorithm shown specifically here) relatively ineffective at regenerating the simulated source spectrum of figure 5, introducing spurious photo-peaks. Figure 8 shows that a good reconstruction of the simulated source spectrum is achieved by applying the techniques of this invention as described above, attributing all of the detected counts measured to just a few photo-peaks regions. Figure 9 illustrates the improved statistics of this invention in restoring peak height count values as compared with traditional deconvolution methods currently in use. It can also be seen that traditional methods in this example significantly underestimate the peak height count value when the count data is statistically noisy.

**Summary**

There is a requirement to perform increasingly accurate spectral measurements on samples to determine the extent and nature of their radioactivity. Radioactive emissions of γ-rays are of particular interests because they are a penetrating form of radiation that can be detected at a distances, even when shielded by dense materials. Additionally, they can be considered as comprised of mono-energetic signatures with particular spectral lines signifying the presences of particular isotopes of materials or combination of such materials.

Due to the penetrating nature of γ-rays, their detection has required the measurement of the energy that they deposit into dense absorber materials and which then becomes manifest, usually by the generation of a pulse of optical radiation through a scintillation process or by the generation of ionised charge species in suitable materials such as semiconductors. The subsequent detection of the optical or charge pulse signatures provides a means of registering the absorption, or partial absorption of a of a γ-ray event in the detector material and from which an assessment of the energy of the interacting γ-ray energy can be made from analysis of the magnitude of the induced secondary pulse. Although either optical or direct electronic conversion of γ-ray energy can be exploited in their detection, or indeed a fusion of a number of such detection processes, the underlying problem of signal interpretation is the same. The success of this interpretation determines the sensitivity and resolution of the energy measures and hence the accuracy the nature and level of the source activity can be evaluated in the low counts regime and with the presence of background radiation levels, which serve to mask the signal with which we are concerned.

In common with signal detection and signal recovery processes, the measured signal is a measurement of the response of the detection system to the incident stimuli, the nature of which are to be determined. To restore a γ-ray source spectrum from detected counts spectrum takes the form of a classical inverse problem type, generally prone to both mathematical and numerical difficulties in its solving, unless certain constraints can be applied to the data including regularisation and a priori information about the system in question, such as the requirement of non-negativity.

**Claims**

1. A method for the detection of and deconvolution of a statistically noisy spectrally resolved radiation dataset comprising the steps of:

   a. placing a radiation detector system into suitable proximity with a test object; collecting radiation data emergent from the test object at the detector; obtaining a spectroscopically resolved measured spectrum count dataset representative of measured flux collected at the detector from the object;
   a1. resolving count data into values for each of a plurality of energy bins
   b. determining a nominal true spectrum;
   b1. computing a statistical fit between the measured spectrum count dataset and the nominal true spectrum;
   c. for each of the plurality of energy bins in the spectrum count dataset, applying a perturbation to the energy value of the bin, which perturbation is randomly generated but with a predetermined maximum magnitude, to produce a modified energy value, wherein the value of each of the energy bins of the estimate of the true spectrum is perturbed in turn, and producing thereby a modified spectrum count dataset;
   d. computing a statistical fit between the modified spectrum count dataset with such modified energy values and the nominal true spectrum;
   d1. comparing the statistical fits computed for the modified and the unmodified spectrum count datasets;
   e. accepting the modified spectrum count dataset as a better approximation of the true spectrum and replacing the unmodified spectrum count dataset by the modified spectrum count dataset if this comparison indicates an increased statistical fit between the modified spectrum count dataset and the nominal true spectrum, and rejecting the modified spectrum count dataset if this comparison indicates a reduced statistical fit between the modified spectrum count dataset and the nominal true spectrum;
   f. repeating steps c to e to produce successive modified spectrum count datasets with progressively improved statistical fit to the nominal true spectrum.

2. The method in accordance with claim 1 applied to collected data wherein the measured flux exhibits statistical noise having a probability distribution attributable to a stochastic aspect of the process of its generation.

3. The method in accordance with claim 2 applied to collected data from a radioactive decay process that exhibits statistical noise having a Poisson distribution attributable to a stochastic aspect of the decay process.

4. The method in accordance with any preceding claim wherein the step of obtaining a spectroscopically resolved dataset of measured flux from the object comprises accumulating photon counts into spectral channels or energy bins corresponding to predefined energy bands distributed across the spectrum of a source/ target.

5. The method in accordance with claim 4 wherein the step of obtaining a spectroscopically resolved dataset of measured flux from the object comprises in a first step the use of an energy selective detection system to accumulate photon counts in an energy discriminating manner and in a second step distributing this measured count data into the plurality of energy bins to produce a set of cumulative values representative of the overall flux in each of a plurality of predefined energy bands.

6. The method in accordance with claim 4 or 5 wherein the detection system comprises a detector adapted to produce spectroscopic resolution inherently.

7. The method in accordance with any preceding claim used as a method of examination of an object which is suspected to be contaminated with undesired radioactive contaminant to detect the presence of such radioactive contaminant.

8. The method in accordance with any preceding claim wherein the radiation is high energy electromagnetic radiation comprising x-rays and/ or γ-rays or subatomic particle radiation.

9. The method in accordance with any preceding claim wherein the detector system used to generate the spectrum to be processed is adapted to detect incident radiation in spectroscopically resolved manner in plural separate energy bins in the sense that it is adapted to differentiate incident radiation simultaneously into plural separate energy bins across the expected detection spectrum.

10. The method in accordance with claim 9 wherein the detector system comprises one or more detector elements of a semiconductor material adapted to act as a detector for high energy electromagnetic radiation such as x-rays or γ-rays, or subatomic particle radiation, wherein at least one of the detector elements is a material adapted to exhibit inherently as a direct material property a spectroscopically variable photoelectric response to different parts of the radiation spectrum across at least a substantial part of the intended radiation spectrum in use.

11. The method in accordance with claim 10 wherein the semiconductor material is formed as a bulk single crystal.

12. The method in accordance with one of claims 10 or 11 wherein the semiconductor material is selected from cadmium telluride, cadmium zinc telluride (CZT), cadmium manganese telluride (CMT), and alloys thereof wherein the semiconductor material, save for incidental impurities, consists essentially of crystalline $Cd_{1-(a+b)}Mn_aZn_bTe$ where a+b <1 and a and/ or b may be zero.

**Patentansprüche**

1. Ein Verfahren zur Detektion und Entfaltung eines statistisch verrauschten spektral aufgelösten Strahlungsdatensatzes, das die folgenden Schritte beinhaltet:

   a. Platzieren eines Strahlungsdetektorsystems in geeigneter Nähe zu einem Testobjekt;
   Sammeln von Strahlungsdaten, die von dem Testobjekt an dem Detektor ausgehen;
   Erhalten eines spektroskopisch aufgelösten gemessenen Spektrumszählungsdatensatzes, der für den gemessenen Fluss repräsentativ ist, der an dem Detektor von dem Objekt gesammelt wurde;
   a1. Auflösen von Zähldaten in Werte für jeden von einer Vielzahl von Energiebehältern,
   b. Bestimmen eines nominalen wahren Spektrums;
   b1. Berechnen einer statistischen Anpassung zwischen dem gemessenen Spektrumszählungsdatensatz und dem nominalen wahren Spektrum;
   c. für jeden der Vielzahl von Energiebehältern in dem Spektrumszählungsdatensatz, Anwenden einer Störung auf den Energiewert des Behälters, wobei die Störung zufällig generiert wird, jedoch mit einer vorbestimmten maximalen Größe, um einen modifizierten Energiewert zu erzeugen, wobei der Wert von jedem der Energiebehälter der Schätzung des wahren Spektrums wiederum gestört wird, und dadurch Erzeugen eines modifizierten Spektrumszählungsdatensatzes;
   d. Berechnen einer statistischen Anpassung zwischen dem modifizierten Spektrumszählungsdatensatz mit derartig modifizierten Energiewerten und dem nominalen wahren Spektrum;
   d1. Vergleichen der statistischen Anpassungen, die für die modifizierten und die nicht modifizierten Spektrumszählungsdatensätze berechnet wurden;
   e. Akzeptieren des modifizierten Spektrumszählungsdatensatzes als bessere Annäherung an das wahre Spektrum und Ersetzen des nicht modifizierten Spektrumszählungsdatensatzes durch den modifizierten Spektrumszählungsdatensatz, wenn dieser Vergleich eine erhöhte statistische Anpassung zwischen dem modifizierten Spektrumszählungsdatensatz und dem nominalen wahren Spektrum anzeigt, und Ablehnen des modifizierten Spektrumszählungsdatensatzes, wenn dieser Vergleich eine reduzierte statistische Anpassung zwischen dem modifizierten Spektrumszählungsdatensatz und dem nominalen wahren Spektrum anzeigt;
   f. Wiederholen der Schritte c bis e, um aufeinanderfolgende modifizierte Spektrumszählungsdatensätze mit progressiv verbesserter statistischer Anpassung an das nominale wahre Spektrum zu erzeugen.

2. Verfahren gemäß Anspruch 1, angewendet auf gesammelte Daten, wobei der gemessene Fluss statistisches Rauschen mit einer Wahrscheinlichkeitsverteilung aufzeigt, die auf einen stochastischen Aspekt des Prozesses seiner Generierung zurückgeführt werden kann.

3. Verfahren gemäß Anspruch 2, angewendet auf gesammelte Daten aus einem radioaktiven Zerfallsprozess, der statistisches Rauschen mit einer Poisson-Verteilung aufzeigt, die auf einen stochastischen Aspekt des Zerfallsprozesses zurückgeführt werden kann.

4. Verfahren gemäß einem der vorhergehenden Ansprüche, wobei der Schritt des Erhaltens eines spektroskopisch aufgelösten Datensatzes des gemessenen Flusses von dem Objekt das Akkumulieren von Photonenzählungen in Spektralkanälen oder Energiebehältern beinhaltet, die vordefinierten Energiebändern entsprechen, die über das Spektrum einer Quelle/eines Ziels verteilt sind.

5. Verfahren gemäß Anspruch 4, wobei der Schritt des Erhaltens eines spektroskopisch aufgelösten Datensatzes des gemessenen Flusses von dem Objekt in einem ersten Schritt das Verwenden eines energieselektiven Detektionssystems zum Akkumulieren von Photonenzählungen auf energiediskriminierende Weise und in einem zweiten Schritt das Verteilen dieser gemessenen Zähldaten in die Vielzahl von Energiebehälter, um einen Satz von kumulativen Werten zu erzeugen, die für den Gesamtfluss in jedem einer Vielzahl von vordefinierten Energiebändern repräsentativ sind, beinhaltet.

6. Verfahren gemäß Anspruch 4 oder 5, wobei das Detektionssystem einen Detektor beinhaltet, der angepasst ist, um inhärent eine spektroskopische Auflösung zu erzeugen.

7. Verfahren gemäß einem der vorhergehenden Ansprüche, das als Verfahren zum Untersuchen eines Objekts verwendet wird, von dem vermutet wird, dass es mit unerwünschten radioaktiven Kontaminanten kontaminiert ist, um das Vorhandensein eines derartigen radioaktiven Kontaminanten zu detektieren.

8. Verfahren gemäß einem der vorhergehenden Ansprüche, wobei die Strahlung hochenergetische elektromagnetische Strahlung ist, die Röntgen- und/oder $\gamma$-Strahlen oder subatomare Teilchenstrahlung beinhaltet.

9. Verfahren gemäß einem der vorhergehenden Ansprüche, wobei das Detektorsystem, das zum Generieren des zu verarbeitenden Spektrums verwendet wird, angepasst ist, um einfallende Strahlung in spektroskopisch aufgelöster Weise in mehreren separaten Energiebehältern in dem Sinne zu detektieren, dass es angepasst ist, um einfallende Strahlung gleichzeitig in mehrere separate Energiebehälter über das erwartete Detektionsspektrum zu differenzieren.

10. Verfahren gemäß Anspruch 9, wobei das Detektorsystem ein oder mehrere Detektorelemente eines Halbleitermaterials beinhaltet, das als Detektor für hochenergetische elektromagnetische Strahlung wie Röntgen- oder $\gamma$-Strahlen oder subatomare Teilchenstrahlung angepasst ist, wobei mindestens eines der Detektorelemente ein Material ist, das angepasst ist, um als direkte Materialeigenschaft eine spektroskopisch variable photoelektrische Reaktion auf verschiedene Teile des Strahlungsspektrums über mindestens einen wesentlichen Teil des beabsichtigten verwendeten Strahlungsspektrums zu zeigen.

11. Verfahren gemäß Anspruch 10, wobei das Halbleitermaterial als Bulk-Einkristall gebildet ist.

12. Verfahren gemäß einem der Ansprüche 10 oder 11, wobei das Halbleitermaterial ausgewählt ist aus Cadmiumtellurid, Cadmiumzinktellurid (CZT), Cadmiummangantellurid (CMT) und Legierungen davon, wobei das Halbleitermaterial, abgesehen von zufälligen Verunreinigungen, im Wesentlichen aus kristallinem $Cd_{1-(a+b)}Mn_aZn_bTe$, wobei a + b < 1 und a und/oder b Null sein können, besteht.

## Revendications

1. Un procédé pour la détection et la déconvolution d'un ensemble de données de rayonnement résolues de façon spectrale statistiquement bruitées comprenant les étapes consistant :

   a. à placer un système détecteur de rayonnement à proximité adéquate d'un objet à tester ;
   à recueillir des données de rayonnement émergeant de l'objet à tester au niveau du détecteur ;

à obtenir un ensemble de données de comptage de spectre mesurées résolues spectroscopiquement représentatif d'un flux mesuré recueilli au niveau du détecteur à partir de l'objet ;

a1. à résoudre des données de comptage en valeurs pour chaque tranche parmi une pluralité de tranches d'énergie ;

b. à déterminer un spectre réel nominal ;

b1. à calculer un ajustement statistique entre l'ensemble de données de comptage de spectre mesurées et le spectre réel nominal ;

c. pour chaque tranche parmi la pluralité de tranches d'énergie dans l'ensemble de données de comptage de spectre, à appliquer une perturbation à la valeur d'énergie de la tranche, laquelle perturbation est engendrée aléatoirement mais avec une amplitude maximale prédéterminée, afin de produire une valeur d'énergie modifiée, où la valeur de chaque tranche parmi les tranches d'énergie de l'estimation du spectre réel est perturbée à son tour, et à produire par là un ensemble de données de comptage de spectre modifiées ;

d. à calculer un ajustement statistique entre l'ensemble de données de comptage de spectre modifiées avec de telles valeurs d'énergie modifiées et le spectre réel nominal ;

d1. à comparer les ajustements statistiques calculés pour les ensembles de données de comptage des spectres modifiées et non modifiées ;

e. à accepter l'ensemble de données de comptage de spectre modifiées comme une meilleure approximation du spectre réel et à remplacer l'ensemble de données de comptage de spectre non modifiées par l'ensemble de données de comptage de spectre modifiées si cette comparaison indique un ajustement statistique augmenté entre l'ensemble de données de comptage de spectre modifiées et le spectre réel nominal, et à rejeter l'ensemble de données de comptage de spectre modifiées si cette comparaison indique un ajustement statistique réduit entre l'ensemble de données de comptage de spectre modifiées et le spectre réel nominal ;

f. à répéter les étapes c à e afin de produire des ensembles de données de comptage de spectre modifiées successifs avec un ajustement statistique progressivement amélioré vis à vis du spectre réel nominal.

2. Le procédé conformément à la revendication 1 appliqué à des données recueillies où le flux mesuré présente du bruit statistique ayant une distribution de probabilité attribuable à un aspect stochastique du processus de sa génération.

3. Le procédé conformément à la revendication 2 appliqué à des données recueillies à partir d'un processus de décroissance radioactive qui présentent du bruit statistique ayant une distribution de Poisson attribuable à un aspect stochastique du processus de décroissance.

4. Le procédé conformément à n'importe quelle revendication précédente où l'étape consistant à obtenir un ensemble de données résolues spectroscopiquement de flux mesuré à partir de l'objet comprend le fait d'accumuler des comptages de photons dans des canaux spectraux ou des tranches d'énergie correspondant à des bandes d'énergie prédéfinies distribuées sur le spectre d'une source/cible.

5. Le procédé conformément à la revendication 4 où l'étape consistant à obtenir un ensemble de données résolues spectroscopiquement de flux mesuré à partir de l'objet comprend dans une première étape l'utilisation d'un système de détection sélective d'énergie afin d'accumuler des comptages de photons d'une manière discriminatoire du point de vue de l'énergie et dans une deuxième étape le fait de distribuer ces données de comptage mesurées dans la pluralité de tranches d'énergie afin de produire un ensemble de valeurs cumulées représentatives du flux global dans chaque bande parmi une pluralité de bandes d'énergie prédéfinies.

6. Le procédé conformément à la revendication 4 ou à la revendication 5 où le système de détection comprend un détecteur conçu pour produire une résolution spectroscopique de façon inhérente.

7. Le procédé conformément à n'importe quelle revendication précédente utilisé comme procédé d'examen d'un objet qui est soupçonné d'être contaminé par un contaminant radioactif indésirable afin de détecter la présence d'un tel contaminant radioactif.

8. Le procédé conformément à n'importe quelle revendication précédente où le rayonnement est un rayonnement électromagnétique de haute énergie comprenant des rayons x et/ou des rayons $\gamma$, ou un rayonnement de particules subatomiques.

9. Le procédé conformément à n'importe quelle revendication précédente où le système détecteur utilisé pour engendrer le spectre à traiter est conçu pour détecter un rayonnement incident de manière résolue spectroscopiquement dans des tranches d'énergie distinctes plurielles dans le sens qu'il est conçu pour dissocier un rayonnement incident simultanément en des tranches d'énergie distinctes plurielles sur le spectre de détection attendu.

10. Le procédé conformément à la revendication 9 où le système détecteur comprend un ou plusieurs éléments détecteurs d'un matériau semi-conducteur conçu pour faire office de détecteur pour un rayonnement électromagnétique de haute énergie tel que des rayons x ou des rayons γ, ou un rayonnement de particules subatomiques, où au moins un des éléments détecteurs est un matériau conçu pour présenter de façon inhérente comme une propriété de matériau directe une réponse photoélectrique variable spectroscopiquement à différentes parties du spectre de rayonnement sur au moins une partie substantielle du spectre de rayonnement escompté en utilisation.

11. Le procédé conformément à la revendication 10 où le matériau semi-conducteur est formé comme un monocristal massif.

12. Le procédé conformément à l'une des revendications 10 ou 11 où le matériau semi-conducteur est sélectionné parmi du tellurure de cadmium, du tellurure de cadmium zinc (CZT), du tellurure de cadmium manganèse (CMT), et des alliages de ceux-ci où le matériau semi-conducteur, impuretés fortuites exceptées, consiste essentiellement en $Cd_{1-(a+b)}Mn_aZn_bTe$ cristallin où a+b<1 et a et/ou b peuvent valoir zéro.

Figure 1

Figure 2

Figure 3

Figure 4

Figure 5

Figure 6

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0077676 A

- WO 2014080209 A